# EUROPÄISCHE PATENTSCHRIFT

(11) **EP 1 593 492 B1**
(45) Veröffentlichungstag und Bekanntmachung des Hinweises auf die Patenterteilung: **04.07.2007**
(21) Anmeldenummer: 04010587.6
(22) Anmeldetag: 04.05.2004
(51) Int. Cl.: B32B 17/10, E06B 3/66, B32B 17/06

(54) **Glas-Sandwichplatte**
Glass sandwich material
Matériau sandwich-verre

(43) Veröffentlichungstag der Anmeldung: 09.11.2005
(73) Patentinhaber: DELO Industrieklebstoffe GmbH & Co. KG, 86899 Landsberg (DE)
(72) Erfinder: Fuchs, Andreas, 70193 Stuttgart (DE); Behling, Stefan Prof., London SW 11 4RB (GB); Herold, Wolf Dr., 86911 Diessen (DE); Nägele, Thomas Dr., 86916 Kaufering (DE)
(74) Vertreter: Strehl Schübel-Hopf & Partner

(56) Entgegenhaltungen:
- DE-A- 2 950 348
- US-A- 5 514 428

## Beschreibung

Glas ist generell ein spröder Werkstoff mit sehr hohen Druckfestigkeitswerten von ca. 800 N/mm². Bedingt durch Mikrorisse an der Glasoberfläche beträgt die Zugfestigkeit jedoch nur ca. 80 N/mm². Die allgemein bekannte Bruchempfindlichkeit von Glas beruht auf dem Aufreißen dieser Mikrorisse bei Biegebeanspruchung. Um höhere Biegebruchfestigkeiten zu erreichen, muss man folglich die Zugbeanspruchung in der Oberfläche des Glases gering halten. So wird z.B. vorgespanntes Glas (ESG) während der Herstellung aufgeheizt und rasch abgekühlt. Dadurch entsteht im Kern eine Zugspannung und an den Oberflächen eine Druckspannung.

Es handelt sich dabei um ein Sicherheitsglas, bei dem die Scheibe aufgrund der aufgebrachten Vorspannung beim Bruch in kleine, stumpfkantige kaum verletzungsfähige Teile zerfällt. Jedoch besteht ein erhebliches Verletzungsrisiko bei Bauverglasungen durch das Herabfallen von schollenartig zusammenhängenden Krümelflächen. Aus diesem Grund wird bei einer Isolierverglasung von Dächern das ESG nur außenseitig angeordnet. Weiterhin gibt es Verbundsicherheitsscheiben bei denen zwei Scheiben mit einer dazwischen liegenden Kunststofffolie verklebt sind, die nach einem Bruch die Glasstücke anhaften lässt.

Da Glasdachelemente statisch hohe Schneelasten aushalten und starken Windböen widerstehen müssen, verlangt die Glasstatik bei ESG-Glas (außen) oftmals Mindestdicken von 5 mm und bei Verbundglas-(VSG-)Scheiben (innenseitig) Dicken von 2 x 6 mm. Ein solches Scheibenelement hat ein erhebliches Eigengewicht, das durch aufwändige und massive Stütz- und Rahmenkonstruktionen statisch abgefangen werden muss und hohe Spannweiten nicht zulässt. Das hohe Eigengewicht der Glaselemente begrenzt die maximale Spannweite auf Grund der maximal zulässigen Durchbiegung.

Bei einer groß dimensionierten, belastbaren, zweischeibigen Verbundglasscheibe sind konstruktive Maßnahmen zu treffen, um die Biegebeanspruchungen klein zu halten. Gleichzeitig sollen bei Bruch keine großen Glasteile ausbrechen können, damit die Anforderungen an ein Sicherheitsglas erfüllt werden.

In EP 0 630 322 B1 ist ein Verglasungselement beschrieben, bei dem durch sich aufrichtende Fasern ein Abstand zwischen zwei Scheiben erzeugt wird. Dieses Abstandsgewebe ist vollflächig mit den Scheibenoberflächen verklebt. Sofern das Abstandsgewebe eine nennenswerte Steigerung der Biegefestigkeit des Verbundglases bewirken soll, muss es relativ dicht gewirkt sein. Dies wiederum beeinflusst vollflächig die Transparenz des Glases. Weiterhin ist bei Tageslicht auf Dauer mit einer Verfärbung des Gewebes und der Klebflächen durch UV-Strahlung zu rechnen. Trotz seiner Intransparenz ist dieses Element für einem gezielten Sonnenschutz nicht verwertbar. Die beschriebene Faserschicht wirkt auch kaum einbruchhemmend.

Um bei einer Verbundglasscheibe eine sehr gute Wärmedämmung zu erreichen, empfiehlt sich die Evakuierung des Zwischenraumes zwischen den Scheiben. Auf Grund der hohen Kräfte von 10 t/m² sind, wie in dem Aufsatz von F.B. Grimm "Glas als tragender Baustoff' in "glas + rahmen" (1991) 19, 1020-1028 beschrieben, Abstandshalter zwischen den Scheiben erforderlich. Diese Abstandshalter sind weder optisch schön, noch fertigungstechnisch kostengünstig in den Herstellungsprozess einer Verbundglasscheibe einzubauen.

In DE 29 50 348 A1 ist eine Sicherheitsverbundscheibe aus zwei transparenten Scheiben und einem dazwischen befindlichen Drahtgerüst beschrieben

Aus dem Aufsatz von J. Wurm u.a. "Glas-GFK-Sandwichplatten im Fassadenbau", in "Glas" (2004) 2, 44-48 ist eine Sandwichplatte mit den im Oberbegriff des Anspruchs 1 angegebenen Merkmalen bekannt. Die dort vorgesehene Abstandshalteranordnung besteht aus zwischen zwei Glasscheiben eingeklebten Stegen, die alle in der gleichen Richtung unter einem solchen Winkel schräg zu den Flächen der Scheiben verlaufen, dass direktes Sonnenlicht abgeschattet wird, diffuses Tageslicht dagegen weitgehend ungehindert hindurchtreten kann.

Der Erfindung liegt die generelle Aufgabe zugrunde, Nachteile, wie sie bei vergleichbaren Sandwichplatten nach dem Stand der Technik auftreten, mindestens teilweise zu vermeiden. Eine speziellere Aufgabe kann darin gesehen werden, eine Sandwichplatte anzugeben die bei geringem Gewicht hoch belastbar ist, gleichzeitig als Sicherheitsscheibe eingesetzt werden kann, selektiven Schutz gegen direkte Sonneneinstrahlung bietet, aber unter definierten Winkeln lichtdurchlässig und damit semitransparent erscheint, beim Einsatz als Isolierscheibe niedrige Wärmedurchgangswerte erreicht und darüberhinaus als ästhetisches Element am Bau einsetzbar ist.

Die erfindungsgemäße Lösung dieser Aufgabe ist in Anspruch 1 definiert. Die danach aus einem Metallblech gebildete Abstandshalteranordnung hat geringes Eigengewicht. Sie kann nur Zug- und Druckkräfte übertragen, jedoch keine Biegemomente. Daher werden auch in den vorzugsweise aus Glas bestehenden Scheiben im wesentlichen nur Zug- und Druckkräfte erzeugt, aber kaum Biegemomente, die andernfalls sehr rasch zum Bruch der Scheiben führen würden.

Die Weiterbildung der Erfindung nach Anspruch 2 hat den Vorteil, dass die Abstandshalteranordnung auch ohne Randbefestigung zwischen den Scheiben stabil ist. Die insgesamt etwa wellen- oder zickzackförmige Anordnung wirkt dabei wie ein Fachwerkträger. In Verbindung mit der hohen Festig- und Biegesteifigkeit der Abstandshalteranordnung lassen sich sehr leichte und filigrane Konstruktionen verwirklichen, die auch groß dimensioniert ohne zusätzliche Abstützung auskommen.

In der Gestaltung nach Anspruch 3 lässt sich die Abstandshalteranordnung besonders einfach fertigen und beim Einbau zwischen die Scheiben handhaben. Dabei ist die Ausbildung gemäß Anspruch 4 zweckmäßig, um Spannungsspitzen in den Verbindungsbereichen zwischen den Metallstegen und den Scheiben zu vermeiden.

Die in Anspruch 5 angegebene Maßnahme dient der Erzielung einer gewünschten Durchsichtigkeit, wobei je nach der Größe und Gestalt der Perforationen eine insgesamt lichtdurchlässige und unter bestimmten Winkeln semitransparente Sandwichplatte erreicht wird. Durch Variation der Verformung und Perforationen lassen sich zahlreiche Variationen erzeugen. Durch die Perforationen und die dreidimensionale Verformung ergibt sich unter bestimmten Blickwinkeln ein freier Durchblick durch diese Perforationen. Sonnen- oder Lichtstrahlen können unter diesem Winkel direkt in den Innenraum gelangen, während unter anderen Winkeln einfallende Strahlen abgeblockt werden. So kann z.B. ein Raum vor der direkten Mittagssonne geschützt werden, während das angenehme Morgen- und Nachmittagslicht ungehindert passieren kann.

Bei Verwendung im Innenbereich von Gebäuden kann die Teiltransparenz der Sandwichplatte interessante Effekte vermitteln, die sich architektonisch gut verwerten lassen. So lassen sich Wände oder Türen erzeugen, die einen direkten Einblick in einen dahinter liegenden Raum verwehren, während sie aus seitlicher Richtung einen Blick in den Raum zulassen.

Das Merkmal des Anspruchs 6 eignet sich als Wärme- und Sichtschutzmaßnahme.

Die Gestaltung nach Anspruch 7 ist auch wegen des sich ergebenden geringen Gewichts von Vorteil.

Der nach Anspruch 8 verwendete Kleber ist besonders geeignet, weil er sich auch im zusammengefügten Zustand der Sandwichplatte durch die transparenten Scheiben hindurch aushärten lässt. Der kraftschlüssige Verbund von Scheiben und Abstandshalteranordnung macht die Sandwichplatte zu einem Hybridbauteil, das trotz geringem Eigengewicht hohe Kräfte übertragen kann. Der Kleber ist UV-stabil und hochtransparent. Auf die Teiltransparenz der Sandwichplatte hat er keinen Einfluss, da er in den ohnehin nicht transparenten Bereichen zwischen den Metallblechstegen und den Scheiben aufgebracht wird. UV-Stabilität ist wichtig, da der Klebstoff bei Verfärbung durch die transparenten Scheiben hindurch unschön in Erscheinung treten würde.

Zweckmäßige Dimensionierungen sind in den Ansprüchen 9 bis 12 angegeben. Dabei besteht die Möglichkeit, über Dicke und Elastizität der Klebstoffschicht an den Kontaktstellen zwischen Scheibe und Abstandshalteranordnung den Aufbau von Spannungsmaxima bei der Einleitung von Kräften in die Scheibe weitgehend zu vermeiden.

Die hier beschriebene Sandwichplatte kann bei sehr geringer Durchbiegung hohe Belastungen aushalten. So konnte z.B. ein Glassandwichelement bestehend aus zwei Deckscheiben mit jeweils 2 bis 3 mm, einem dünnen Aluminiumblech von 0,2 mm und einer Bauhöhe von 10 mm gegenüber einer 4 mm dicken monolithischen Glasscheibe mehr als die vierfache Biegebeanspruchung aushalten bzw. bei gleicher zulässiger Belastung wesentlich leichter sein was beim Einsatz am Bau in jeder Hinsicht wünschenswert ist.

Auf Grund des geringen Eigengewichtes und der hohen Tragfähigkeit können bei einer Horizontalverglasung wesentlich größere Spannweiten bei deutlich geringerem Materialaufwand der Tragkonstruktion erreicht werden.

Die Glas-Sandwichplatte erfüllt gleichzeitig die Anforderungen an ein Sicherheitsglas. So besteht z.B. bei Überkopfverglasung kein Verletzungsrisiko durch herab fallende große Glasteile, da die Scheiben auf ihrer gesamten Fläche in einem geringen Abstand von 3 bis 10 mm durch den Klebstoff mit den Kontaktflächen des geformten Füllelementes fest verbunden sind. Längs der Bruchlinie des Glases werden die Scheiben durch die aus Metallblech gebildete, stabile und verformbare Abstandshalteranordnung gehalten, so dass sich nur kleine ungefährliche Glasstücke aus dem Verbund lösen können. Die zerstörte Glas-Sandwichplatte behält entsprechend einer VSG Scheibe aus 2 x TVG (teilvorgespanntes Glas) bei vierseitiger, linienförmiger Lagerung eine Resttragfähigkeit.

Um auf ansprechend niedrige Wärmedurchgangszahlen von unter k = 1 W/m²K zu kommen, ist es möglich, den Raum zwischen den Scheiben zu evakuieren. Es bedarf hierzu nur einer diffusionsdichten Randabdichtung. Die hohen Vakuumkräfte werden durch die Abstandshalteranordnung aufgenommen, so dass es zu keiner Einwölbdeformation der Glasscheiben kommt. Die Kontaktflächen zwischen den Abstandshalteranordnung und den Scheiben sind so gering, dass nur sehr kleine, punktuelle Wärmebrücken entstehen, wobei der verbindende Klebstoff zudem noch als thermischer Isolator wirkt. Weiterhin bewirkt auch das Vakuum eine Erhöhung des Schallschutzes.

Die sichere Verbindung der Scheiben gegeneinander durch die innere Abstandshalteranordnung lässt geometrische Abweichungen der Scheibenränder auf Grund von Belastungen nicht zu, so dass auch der Randverbund von Dichtungsschäden verschont bleibt. Zur Aufnahme mechanischer oder thermischer Verformungskräfte werden folglich keine hochelastischen Dichtstoffe benötigt; vielmehr reichen zur Abdichtung eine einfache dünne Aluminiumfolie und ein diffusionsdichter Klebstoff. Eine zusätzliche, tragende Verrahmung des Sandwichplatte wird nicht benötigt, da die starr und kraftschlüssig miteinander verbundenen Bauteile eine Statik besitzen, die weit über übliche aufgesetzte und tragende Verrahmungen hinausgeht.

Sofern man niedrige Wärmestrahlungs-Emissionswerte erreichen will, können auf der Innenseite der äußeren Scheibe emissionsmindernde Schichten (Low-E-Beschichtungen) aufgebracht werden.

Ausführungsbeispiele der erfindungsgemäßen Sandwichplatte werden nachstehend anhand der Zeichnungen näher erläutert; darin zeigen
Fig. 1 und 3 Explosionsdarstellungen zweier unterschiedlicher Anordnungen und
Fig. 2 die in der Sandwichplatte nach Fig. 1 verwendete Abstandshalteranordnung im Grundriss.

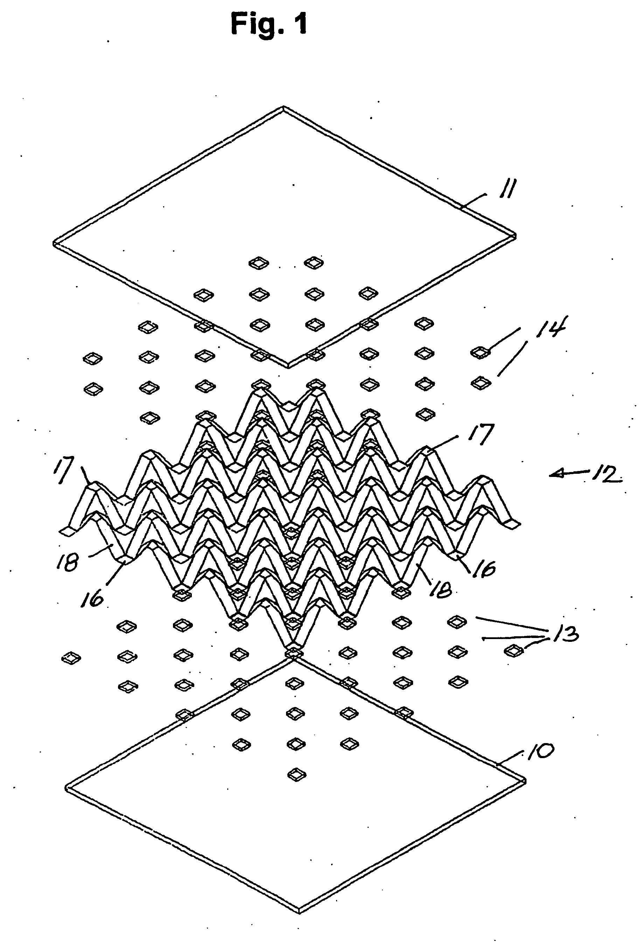

Die in Fig. 1 dargestellte Sandwichplatte besteht aus einer 2 mm dicken unteren Glasscheibe **10,** einer ebenfalls 2 mm dicken oberen Glasscheibe **11** und einer dazwischen liegenden Abstandshalteranordnung **12,** die über in der Zeichnung getrennt gezeigte Klebepunkte **13, 14** mit den Glasscheiben **10, 11** verbunden wird. Die Abstandshalteranordnung **12** ist aus einem 0,2 mm dicken Aluminiumblech durch Stanzen und Verformen hergestellt. Im fertigen Zustand haben die Scheiben **10, 11** einen gegenseitigen Abstand von z.B. 10 mm.

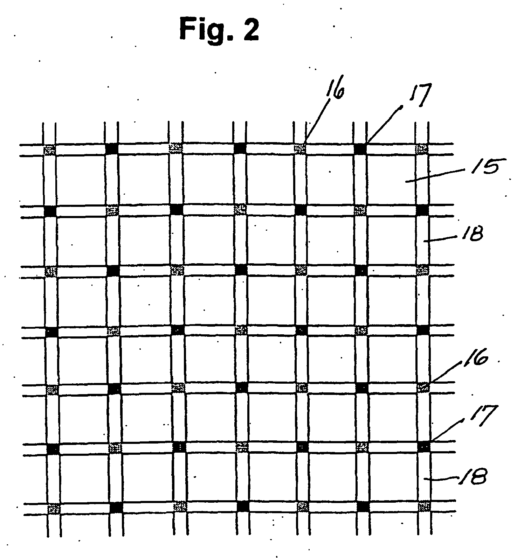

In Fig. 2 ist das mit quadratischen Perforationen **15** gitterartig gestanzte Ausgangsblech für die Abstandshalteranordnung **12** im Grundriss dargestellt. Die Kreuzungsbereiche **16, 17** zwischen den Gitterstegen **18** dienen zur Aufnahme der Klebepunkte **13, 14.** Bei der Verformung werden die Kreuzungsbereiche **16, 17** in beiden Koordinatenrichtungen abwechselnd nach oben und unten gedrückt, so dass Kreuzungsbereiche **16, 17** abwechselnd in zwei parallele Ebenen versetzt werden und die Stege **18** unter Winkeln von 45° bis 60° zu diesen Ebenen verlaufen. In Fig. 2 sind die nach unten gedrückten Kreuzungsbereiche **16** hell, die nach oben gedrückten Kreuzungsbereiche **17** dunkel dargestellt.

Die Übergänge zwischen der Stegen **18** und den Kreuzungsbereichen **16**, **17** werden nicht kantig sondern verrundet ausgebildet, um Spannungsspitzen an den Stellen ihrer Verklebung mit den Glasscheiben **10, 11** zu vermeiden. Die Verrundungen sind in der schematischen Darstellung der Fig. 1 nicht zu sehen.

Zur Verbindung wird auf die untere Glasscheibe **10** an den Kreuzungsbereichen **16** genau entsprechenden Stellen eine hochgenaue Menge Klebstoff aufgebracht, z.B. berührungslos aufgejettet, um die unteren Klebepunkte **13** auszubilden. Alternativ kann die Klebstoffmenge auf die Kreuzungsbereiche **16** der verformten Abstandshalteranordnung **12** gejettet werden. Sodann wird die Abstandshalteranordnung **12** in einem präzisen Absetzvorgang parallel auf die Scheibe **10** aufgesetzt und der Klebstoff ausgehärtet. In einem zweiten Schritt werden die oberen Kreuzungsbereichen **17** mit Klebstoff versehen, um die Klebepunkte **14** auszubilden, und die zweite Glasscheibe **11** parallel abgesetzt.

Durch den Einsatz von UV- oder lichthärtenden Klebstoffen sind kurze Fertigungszeiten zu erreichen. Sobald die Abstandshalteranordnung **12** auf die untere Scheibe **10** abgesetzt wurde, wird eine Lichtquelle mit auf den Photoinitiator des Klebstoffes abgestimmtem Emmissionsspektrum eingeschaltet. Da die Scheibe transparent ist, härtet der Klebstoff nach wenigen Sekunden aus. Zur Befestigung der oberen Glasscheibe **11** wird dieser Vorgang wiederholt.

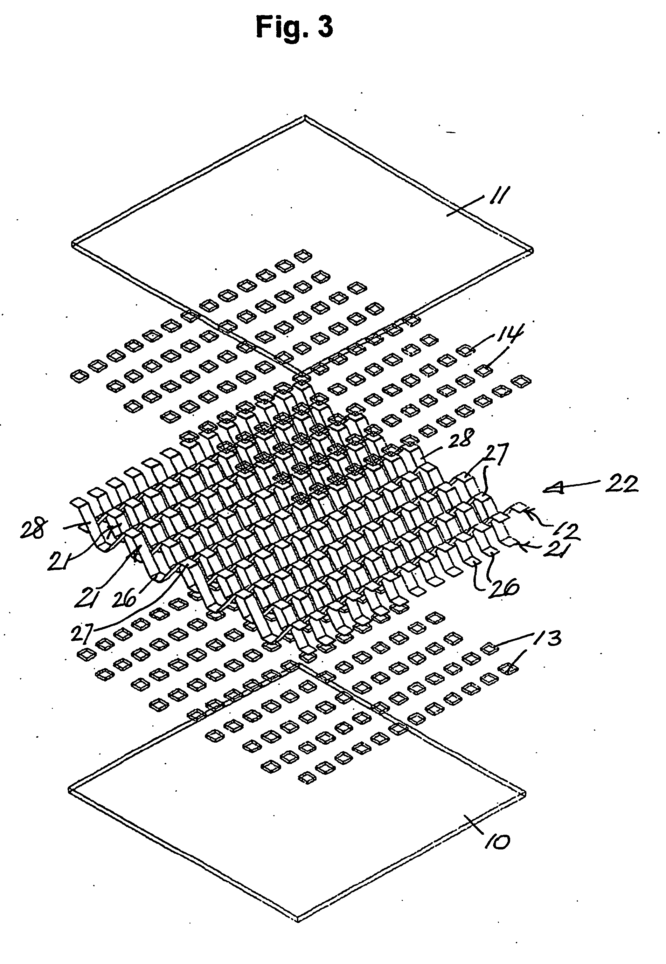

Die in Fig. 3 gezeigte Sandwichplatte unterscheidet sich von der nach Fig. 1 in der Gestaltung der Abstandshalteranordnung **22**, die aus einem nicht perforierten sondern nur mit Schnitten versehenen Metallblech hergestellt wurde. Die Schnitte begrenzen in diesem Fall in nur einer Koordinatenrichtung verlaufende Stegbänder **21**, deren jedes abwechselnd nach oben und unten gedrückt wird, so dass wiederum Verbindungsbereiche **26**, **27** abwechselnd in zwei parallele Ebenen versetzt werden und durch unter Winkeln von 45° bis 60° zu diesen Ebenen verlaufende Stege **28** verbunden sind. Dabei werden benachbarte Stegbänder **21** gegenläufig verformt, so dass die unteren Verbindungsbereiche **26** eines Stegbandes mit den oberen Verbindungsbereichen **27** der benachbarten Stegbänder fluchten. Die Schnitte sind jeweils so lang, dass benachbarte Stegbänder **21** nur in der Mitte der jeweiligen Stege **28** zusammenhängen, was in der schematischen Darstellung der Fig. 3 nicht gezeigt ist.

## Patentansprüche

1. Sandwichplatte mit einer zwischen zwei transparenten Scheiben **(10, 11)** angeordneten Abstandshalteranordnung **(12; 22),** die mit den Scheiben **(10, 11)** verklebt ist und schräg zu deren Flächen verlaufende Stege **(18; 28)** ausweist
**dadurch gekennzeichnet, dass** die Abstandshalteranordnung **(12; 22)** aus Metallblech gebildet ist.

2. Sandwichplatte nach Anspruch 1, wobei die Abstandshalteranordnung **(12; 22)** in unterschiedlichen Winkeln zu den Flächen der Scheiben (**10**, **11**) verlaufende Stege **(18; 28)** aufweist.

3. Sandwichplatte nach Anspruch 1 oder 2, wobei die Stege (**18; 28**) durch Stanzen und Verformen zusammenhängend aus dem Metallblech gebildet sind.

4. Sandwichplatte nach Anspruch 3, wobei die Stege **(18; 28)** im Bereich ihrer Kontakte mit den Scheiben **(10, 11)** verrundet sind.

5. Sandwichplatte nach Anspruch 3 oder 4, wobei benachbarte Stege **(18)** der Abstandshalteranordnung (**12**) durch Perforationen (**15**) in dem Metallblech voneinander getrennt sind.

6. Sandwichplatte nach einem der vorhergehenden Ansprüche, wobei das Metallblech eine reflektierende Fläche hat.

7. Sandwichplatte nach einem der vorhergehenden Ansprüche, wobei das Metallblech aus Aluminium besteht.

8. Sandwichplatte nach einem der vorhergehenden Ansprüche wobei der Klebstoff ein durch Strahlung härtbarer Acrylat- oder Epoxidkleber ist.

9. Sandwichplatte nach Anspruch 8, wobei der Klebstoff in einer Dicke von weniger als 0,5 mm aufgetragen ist.

10. Sandwichplatte nach einem der vorhergehenden Ansprüche, wobei das Metallblech eine Dicke von 0,1 bis 0,3 mm, vorzugsweise 0,2 mm, hat.

11. Sandwichplatte nach einem der vorhergehenden Ansprüche, wobei jede Scheibe (**10, 11**) eine Dicke von 1,5 bis 4 mm, vorzugsweise 3 mm, hat.

12. Sandwichplatte nach einem der vorhergehenden Ansprüche, wobei die Scheiben (**10, 11**) einen gegenseitigen Abstand von 3 bis 20 mm haben.

13. Sandwichplatte nach einem der vorhergehenden Ansprüche, wobei der Raum zwischen den Scheiben **(10, 11)** evakuierbar ist.

## Claims

1. A sandwich plate comprising a spacer arrangement **(12; 22)** disposed between two transparent panes **(10, 11**), the spacer arrangement being glued to the panes **(10, 11)** and including webs **(18; 28)** extending obliquely to the surfaces of the panes,
**characterized in that** the spacer arrangement **(12; 22)** is formed of sheet metal.

2. The sandwich plate of claim 1, wherein the spacer arrangement **(12; 22)** includes webs **(18; 28)** extending at different angles with respect to the planes of the panes **(10, 11).**

3. The sandwich plate of claim 1 or 2, wherein the webs **(18, 28)** are formed of the sheet metal by punching and deforming so as to form a continuous unit.

4. The sandwich plate of claim 3 wherein the webs **(18, 28)** are rounded in their areas of contact with the panes **(10, 11).**

5. The sandwich plate of claim 3 or 4 wherein adjacent webs **(18)** of the spacer arrangement **(12)** are separated from one another by perforations **(15)** formed in the sheet metal.

6. The sandwich plate of any preceding claim wherein the sheet metal has a reflective surface.

7. The sandwich plate of any preceding claim wherein the sheet metal is made of aluminium.

8. The sandwich plate of any preceding claim wherein the adhesive is a radiation curable acrylate or epoxide adhesive.

9. The sandwich plate of claim 8 wherein the adhesive is applied in a thickness of less than 0.5 mm.

10. The sandwich plate of any preceding claim wherein the sheet metal has a thickness of 0.1 to 0.3 mm, preferably 0,2 mm.

11. The sandwich plate of any preceding claim wherein either pane **(10, 11)** has a thickness of 1.5 to 4 mm, preferably 3 mm.

12. The sandwich plate of any preceding claim wherein the panes **(10, 11)** are spaced apart by 3 to 20 mm.

13. The sandwich plate of any preceding claim wherein the space between the panes **(10, 11)** is adapted to be evacuated.

## Revendications

1. Panneau en sandwich comportant un agencement écarteur (12 ; 22) agencé entre deux vitres transparentes (10, 11), qui est collé avec les vitres (10, 11) et qui comprend des barrettes (18 ; 28) s'étendant en oblique par rapport à leurs surfaces,
**caractérisé en ce que** l'agencement écarteur (12 ; 22) est formé en tôle métallique.

2. Panneau en sandwich selon la revendication 1, dans lequel l'agencement écarteur (12 ; 22) comprend des barrettes (18 ; 28) s'étendant à des angles différents par rapport aux surfaces des vitres (10, 11).

3. Panneau en sandwich selon la revendication 1 ou 2, dans lequel les barrettes (18 ; 28) sont formées d'un seul tenant par poinçonnage et par mise en forme à partir de la tôle métallique.

4. Panneau en sandwich selon la revendication 3, dans lequel les barrettes (18 ; 28) sont arrondies dans la zone de leurs contacts avec les vitres (10, 11).

5. Panneau en sandwich selon la revendication 3 ou 4, dans lequel des barrettes voisines (18) de l'agencement écarteur (12) sont séparées les unes des autres par des perforations (15) dans la tôle métallique.

6. Panneau en sandwich selon l'une des revendications précédentes, dans lequel la tôle métallique présente une surface réfléchissante.

7. Panneau en sandwich selon l'une des revendications précédentes, dans lequel la tôle métallique est constituée en aluminium.

8. Panneau en sandwich selon l'une des revendications précédentes, dans lequel la colle est une colle d'acrylate ou d'époxy durcissable par irradiation.

9. Panneau en sandwich selon la revendication 8, dans lequel la colle est déposée à une épaisseur de moins de 0,5 mm.

10. Panneau en sandwich selon l'une des revendications précédentes, dans lequel la tôle métallique présente une épaisseur de 0,1 à 0,3 mm, de préférence de 0,2 mm.

11. Panneau en sandwich selon l'une des revendications précédentes, dans lequel chaque vitre (10, 11) présente une épaisseur de 1,5 à 4 mm, de préférence de 3 mm.

12. Panneau en sandwich selon l'une des revendications précédentes, dans lequel les vitres (10, 11) présentent une distance mutuelle de 3 à 20 mm.

13. Panneau en sandwich selon l'une des revendications précédentes, dans lequel l'espace entre les vitres (10, 11) est susceptible d'être évacué.
